# EUROPÄISCHE PATENTSCHRIFT

(11) **EP 3 609 747 B1**
(45) Veröffentlichungstag und Bekanntmachung des Hinweises auf die Patenterteilung: **15.09.2021**
(21) Anmeldenummer: 18716232.6
(22) Anmeldetag: 05.04.2018
(51) Int. Cl.: B60S 1/48, B60S 1/52, B60S 1/54, B60S 1/56, G02B 27/00

(54) **REINIGUNGSVORRICHTUNG ZUM REINIGEN EINER TRANSPARENTEN ABDECKUNG EINER OPTISCHEN ODER OPTOELEKTRONISCHEN VORRICHTUNG**
CLEANING DEVICE FOR CLEANING A TRANSPARENT COVER OF AN OPTICAL OR OPTOELECTRONIC DEVICE
DISPOSITIF DE NETTOYAGE SERVANT À NETTOYER UN ÉLÉMENT DE RECOUVREMENT TRANSPARENT D'UN DISPOSITIF OPTIQUE OU OPTOÉLECTRONIQUE

(30) Priorität: 11.04.2017 DE 102017206211; 13.04.2017 DE 102017206454; 20.12.2017 DE 102017223393
(43) Veröffentlichungstag der Anmeldung: 19.02.2020
(73) Patentinhaber: Continental Automotive GmbH, 30165 Hannover (DE)
(72) Erfinder: HAHN, Torsten, 34576 Homberg (DE)
(74) Vertreter: Continental Corporation
(86) Internationale Anmeldenummer: PCT/EP2018/058695
(87) Internationale Veröffentlichungsnummer: WO 2018/189018

(56) Entgegenhaltungen:
- EP-A1- 2 955 069
- EP-A1- 3 168 094
- DE-A1-102015 121 434
- US-A1- 2015 040 953
- US-A1- 2015 343 999
- US-A1- 2016 339 875

## Beschreibung

Die Erfindung betrifft eine Reinigungsvorrichtung zum Reinigen eines transparenten Elements einer optischen oder optoelektronischen Vorrichtung, insbesondere einer Kameralinse, sowie ein optisches Erfassungssystem zur Anordnung in einem Fahrzeug, umfassend eine oder mehrere Reinigungsvorrichtungen mit optischen oder optoelektronischen Vorrichtungen.

Bei Kraftfahrzeugen sind heutzutage zunehmend Assistenzsysteme mit Sensoren eingebaut, die den Fahrzeugnutzer beim Fahren des Fahrzeuges unterstützen und dabei die Umgebung des Fahrzeugs jederzeit zuverlässig erfassen und überwachen sollen.

Derartige Assistenzsysteme beinhalten hierfür optischen oder optoelektronischen Vorrichtungen wie insbesondere Kameras, jedoch auch laserbasierten oder Infrarotsensoren, die im Außenbereich am Fahrzeug angebracht sind. Die grundlegenden Funktionen von derartigen Vorrichtungen sind vielfältig und beinhalten von einfachen Hilfsfunktionen wie beispielsweise Darstellung vom Fahrzeug verdeckter Bereiche auf einem Display und Parkunterstützung bis hin zu Lieferung von Eingangsdaten für autonome und vollautomatisierte Fahrfunktionen.

Derartige Vorrichtungen verfügen über transparente Elemente wie Linsen oder Abdeckungen, welche das Licht je nach Anwendungsfall uneingeschränkt oder in einem bestimmten eingeschränkten Wellenbereich durchlassen. Derartige transpatente Elemente sind oft nach Außen konvex beziehungsweise gewölbt ausgebildet, um beispielsweise einen besonders breiten Erfassungsbereich für eine Kamera zu ermöglichen wie beispielsweise sogenannten Fisheye Kameralinsen. Des Weiteren sind derartigen transpatenten Elemente funktionsbedingt im Außenbereich des Fahrzeugs angeordnet und daher Verschmutzung und äußeren Witterungseinflüssen ausgesetzt und müssen zur Funktionsgewährleistung bei Bedarf gereinigt werden.

Aus DE 10 2015 217 546 B3 ist beispielsweise eine gattungsgemäße Reinigungsvorrichtung bekannt. Bei der transparenten Abdeckung handelt es sich hierbei um die Linse einer Digitalkamera. Die Linse wird quer zu ihrer optischen Achse aus drei am Umfang verteilten, als Pralldüsen ausgebildeten Düsen mit flüssigem Reinigungsmittel angestrahlt.

Häufige Reinigungsintervalle verursachen einen entsprechend großen Verbrauch von Reinigungsflüssigkeit aus einem begrenzten, mitzuführenden Vorrat. Um Nachfüllinterwale zu verlängern müssen große Vorratsbehälter vorgesehen werden, mit Nachteilen für die Raumausnutzung, Gewicht und Kosten.

Neben Verschmutzung können unerwünschte optische Verzerrungen des Kamerabildes auch durch einfache Wassertropfen auf der Kameralinse verursacht werden.

Aus US 2015/040953 A1 ist eine Reinigungsvorrichtung für einen optischen Sensor bekannt, an deren Ansaugleitung eine Luftpumpe über ein Verbindungsstück angeschlossen ist, in welchem die Reinigungsflüssigkeit mit Luft vermischt werden kann. Die Vermischung erfolgt durch Ansteuerung der Luftpumpe, wobei diese parallel mit der Flüssigkeitspumpe zugeschaltet wird und dieser für eine bestimmte Zeit nachläuft.

Vor diesem Hintergrund liegt der Erfindung die Aufgabe zugrunde, eine verbesserte Reinigungsvorrichtung bereitzustellen, die die es ermöglicht, die Verfügbarkeit und Funktionsgewährleistung der verwendeten optischen oder optoelektronischen Vorrichtungen bei allen Wetterbedingungen und Betriebszuständen zu erhöhen und möglichst jederzeit sowie bei einem reduzierten Einsatz von Reinigungsflüssigkeit sicherzustellen.

Diese Aufgabe wird durch die Merkmale des Hauptanspruchs gelöst. Weiterbildungen und verschiedene Ausführungsbeispiele der Erfindung ergeben sich aus den Unteransprüchen und der nachfolgenden Beschreibung und Figuren.

Die Erfindung sieht vor, dass das pneumatische Rückschlagventil, das hydraulische Rückschlagventil oder beide Ventile elektrisch gesteuert ausgebildet werden.

Damit kann eine auf eine besonders einfache Weise den jeweiligen Betriebs- und Umweltzustände optimal angepasste Reinigungsstrategie mit ausschließlich Druckluft, Reinigungsflüssigkeit oder einem Gemisch der beiden realisiert werden. Durch den Einsatz von unbegrenzt, weil aus der Atmosphäre frei beziehbaren Luft als Reinigungsfluid werden Reinigungszyklen mit Reinigungsflüssigkeit wesentlich seltener, können je nach Einbaulage im Fahrzeug gar gänzlich überflüssig werden. Der Verbrauch von Reinigungsflüssigkeit wird insgesamt reduziert. Bauraum, Gewicht und Kosten werden durch kleinere Reinigungsflüssigkeits-Vorratsbehälter eingespart.

Hierbei kann die Reinigungsvorrichtung zusammen mit der optischen oder optoelektronischen Vorrichtung, den Kanälen und Sperrventilen als eine integrierte, universell an unterschiedliche Einbaupositionen im Fahrzeug einsetzbare Baueinheit ausgeführt werden. Logistik und Endmontage am Fahrzeug werden vereinfacht.

Gemäß einer bevorzugten Weiterbildung der Erfindung ist das transparente Element nach Außen gewölbt ausgebildet. Der Reinigungsmittelstrahl wird dabei zwecks Ausnutzung von Coandä-Effekt im Wesentlichen auf einen radialen Außenrand des transparenten Elements ausgerichtet. Dabei ist es besonders vorteilhaft, wenn der Reinigungsmittelstrahl als ein Flachstrahl ausgebildet ist, welches sich im Wesentlichen in einer zu der optischen Achse orthogonalen Ebene ausbreitet.

Dadurch wird die gesamte Oberfläche des transparenten Elements bei vergleichsweise niedrigem Druck und reduzierten Fluidbedarf effektiv umspült und gereinigt. Die Düse kann als eine besonders einfache und flache Pralldüse ausgebildet werden. Neben einer Vereinfachung der Konstruktion werden die die Optik von Außenflächen am Fahrzeug und Haptik - beispielsweise beim Einbau in einen Tür- oder Heckklappenggriff - wenig beeinflusst. Der Verbrauch von Reinigungsfluid wird ebenfalls reduziert.

Gemäß einer bevorzugten Ausführung der Erfindung wird der Betriebsdruck der Reinigungsflüssigkeit in dem Hydraulikkanal größer als ein Betriebsdruck von Druckluft in dem Pneumatikkanal vorgesehen.

Durch den vergleichsweise höheren Druck der Reinigungsflüssigkeit kann bei Bedarf der Druckluft durch einfaches Freigeben des Hydraulikkanals jederzeit übersteuert werden, wenn beispielsweise der Reinigungseffekt mit Druckluft nicht ausreicht. Der begrenzte Reinigungsflüssigkeitsvorrat kann dadurch besonders sparsam verbraucht werden. Auf zusätzliche Sperr- und Steuerungsvorrichtungen kann verzichtet werden.

Bevorzugt kann der Betriebsdruck von Druckluft in dem Pneumatikkanal in einem Bereich zwischen 0,8 bar und 1,2 bar, insbesondere bei etwa 1 bar vorgesehen sein. Dadurch kann ein optimales Kompromiss zwischen effektiven und kostengünstigen Drucklufterzeugung, einfachen Werkstoffen für Pneumatikkanäle und Leitungen und einem guten Reinigungsergebnis realisiert werden.

Damit kann beispielsweise die Luftversorgung besonders effektiv bedarfsgerecht für einzelne Reinigungsvorrichtung innerhalb eines verbundenen, mehrere Reinigungsvorrichtungen enthaltenden Reinigungssystems mit einem einzigen gemeinsamen Drucklufterzeuger angepasst werden.

Gemäß einer weiteren erfindungsgemäßen Ausführungsform kann in dem Pneumatikkanal ein Dosierventil zum gesteuerten Variieren einer in den Fluidzulauf eintretenden Druckluftmenge vorgesehen sein, um eine besonders feinfüllige, bedarfsgerechte vom Betriebszustand des Drucklufterzeuger unabhängige Modulierung von Luftstrom zu ermöglichen.

Des Weiteren sieht die Erfindung vor, dass die Druckluft kontinuierlich strömend in den Fluidzulauf eingespeist wird. Durch die damit bewirkbare permanente Luftspülung kann der Kontamination des transparenten Elements vorgebeugt werden. Auf seine Oberfläche gelangt grundsätzlich weniger Staub, kleine Schmutzpartikel und Wassertropfen werden sofort entfernt. Dadurch werden weniger Reinigungsintervalle mit Reinigungsflüssigkeit benötigt, das Volumen von Vorratsbehälter kann reduziert werden.

Ebenso sieht die Erfindung vor, dass die Druckluft gepulst stoßartig in den Fluidzulauf eingespeist werden kann. Mit den damit erzeugbaren Luftstößen können Wassertropfen und größere Schmutzpartikeln ohne Reinigungsflüssigkeitseinsatz entfernt werden.

Die Erfindung betrifft weiterhin ein optisches Erfassungssystem zur Anordnung in einem Fahrzeug, umfassend wenigstens eine und vorzugsweise mehrere erfindungsgemäße Reinigungsvorrichtungen.

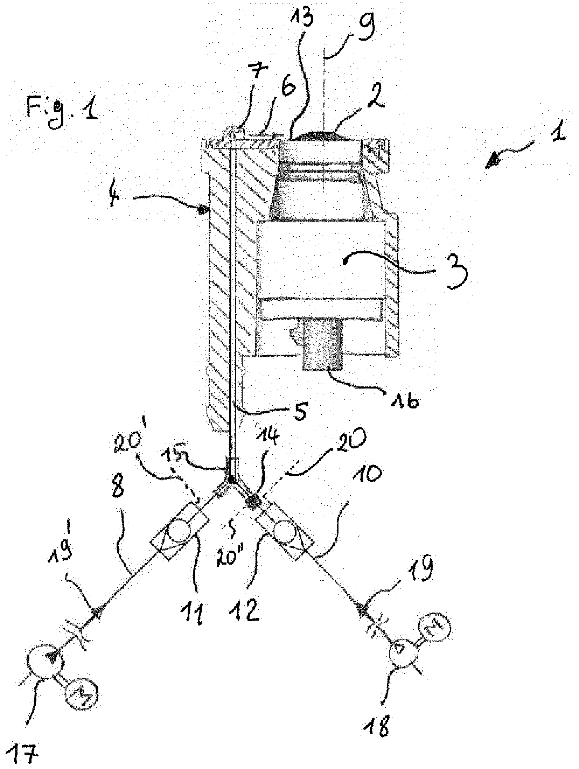

Die vorliegende Erfindung wird nachfolgend beispielhaft anhand in der Fig.1 zusammengefasst dargestellten Ausführungsbeispielen einer erfindungsgemäß verbesserten Reinigungsvorrichtung für eine Kameralinse näher erläutert.

Eine als Kamera mit einem als Kameralinse ausgebildeten transparenten Element 2 ausgeführte optische Vorrichtung 3 ist in einem Gehäuse 4 der Reinigungsvorrichtung 1 angeordnet. Eine elektrische Schnittstelle 16 dient zum Anschluss der Vorrichtung 3 an eine oder mehrere hier nicht gezeigten elektrische Versorgungseinrichtungen und elektronische Steuereinheiten. Das transparente Element 2 ist nach Außen gewölbt und besitzt eine optische Achse 9.

Ein Fluidzulauf 5 dient zur Versorgung einer einzelnen Düse 7 mit Reinigungsfluid. Innerhalb der Erfindung bleibt die Verwendung mehrerer Düsen 7 jederzeit zulässig.

Die Düse 7 ist als ein Deflektor beziehungsweise Pralldüse ausgebildet. Sie formt einen flachen Reinigungsmittelstrahl 6, der sich quer zu der optischen Achse 9, in eine zu dieser im Wesentlichen orthogonalen Ebene ausbreitet. Der Reinigungsmittelstrahl 6 ist dabei derart ausgerichtet, dass er das transparente Element 2 annähernd an seinem radialen Außenrand 13 trifft.

Hierbei wird eine in der Strömungslehre als Coandä-Effekt bekannte Eigenschaft von fluiden Strömungen ausgenutzt, dem Verlauf einer konvexen Oberfläche zu folgen. Aufgrund von Coandä-Effekt umschmiegt der Reinigungsmittelstrahl 6 die gewölbte Oberfläche des transparenten Elements 2 und reinigt diese vollständig, statt sich davon abzulösen oder abzuprallen.

An seinem der Düse 7 entgegengesetztem Ende ist der Fluidzulaufs 5 mit einem Hydraulikkanal 8 und einem Pneumatikkanal 10 verbunden.

Aus dem Hydraulikkanal 8 wird der Fluidzulauf 5 mit einer Reinigungsflüssigkeit versorgt, welche aus einem nicht gezeigten Vorratsbehälter durch eine elektrisch angetriebene Pumpe 17 gefördert wird.

Aus dem Pneumatikkanal 10 wird der Fluidzulauf 5 mit Druckluft versorgt, welches, je nach erfindungsgemäßen Ausführung, entweder wie dargestellt in einem gesondert zugeordneten Drucklufterzeuger 18 erzeugt, oder von einer anderen bestehenden Quelle wie beispielsweise Fahrzeuglüftungsanlage, Druckluftbehälter, Federungssystem-Kompressor und Dergleichen abgegriffen wird.

Je nach Betriebszustand kann der Fluidzulauf 5 exklusiv mit Reinigungsflüssigkeit exklusiv mit Druckluft oder mit einem Gemisch aus beiden durchströmt werden.

Für die Erfindung ist es hierbei unerheblich ob die beiden Kanäle 8,10 nebeneinander in einem gemeinsamen Bauteil ausgebildet oder als einzelne separate Leitungen über ein geeignetes Anschlussstück 15 - beispielsweise ein Y-Stück - an den Fluidzulauf 5 angeschlossen sind. Besonders vorteilhaft und Montageeffizient ist es jedoch, wenn die beiden Rückschlagventile 11,12 zusammen mit benachbarten Abschnitten der Kanäle 8,10 und dem Fluidzulauf 5 in das Gehäuse 4 integriert vorgesehen sind.

In dem Hydraulikkanal 8 und dem Pneumatikkanal 10 ist jeweils ein Rückschlagventil 11,12 derart eingebaut, dass der jeweilige Kanal gegen die Durchflussrichtung 19,19' sperrbar ist.

Die Rückschlagventile 11,12 können je nach erfindungsgemäßen Ausführungsform entweder als einfache oder als elektrisch beziehungsweise elektromagnetisch steuerbare Rückschlagventile ausgebildet sein, welche über eine zugeordnete Ansteuerleitung 20,20' angesteuert werden können und dadurch der jeweilige Reinigungsflüssigkeits- oder Luftstrom gezielt moduliert werden kann.

Optional kann in dem Pneumatikkanal 10 ein Dosierventil 14 eingesetzt werden, mit dem der in den Fluidzulauf einfließender Luftstrom zusätzlich zum oder anstatt des steuerbaren Rückschlagventils 12 modulierbar wäre. Das Dosierventil 14 kann dabei beispielsweise als ein elektrisch steuerbares Absperr-oder Drosselventil ausgebildet sein.

Bei einer gezielten Unterbrechung der Versorgung mit Reinigungsflüssigkeit und Öffnung des pneumatischen Rückschlagventils 12 wird der Fluidzulauf exklusiv mit Druckluft durchströmt. Ein Luftdruck in einem Druckbereich zwischen etwa 0,8 und 1,2 bar, vorzugsweise ∼1 bar erweist sich dabei für den angestrebten Einsatzzweck als besonders geeignet. Die Eingrenzung des Drucks kann durch entsprechende Auslegung von Drucklufterzeuger 18 und des pneumatischen Rückschlagventils 12 erfolgen.

Der Luftstrom kann dabei je nach Bedarf auf unterschiedliche Art, beispielsweise kontinuierlich oder stoßweise pulsierend oder anders moduliert abgegeben werden. Die Modulierung kann je nach Ausführungsform entweder durch Ansteuerung von Drucklifterzeuger 18, des pneumatischen Rückschlagventils 12 oder des Dosierventils 14 erfolgen.

Bei einer kontinuierlichen Abgabe von Druckluft wird das transparente Element 2 permanent mit Luftstrom umspült, bei gepulster Abgabe mit einzelnen Luftstößen angeblasen.

Der Druck von Reinigungsflüssigkeit in dem Hydraulikkanal 8 ist erfindungsgemäß höher als der Luftdruck im Pneumatikkanal 10 auszulegen, beispielsweise durch entsprechende Auslegung der Pumpe 17. Dadurch kann die Versorgung der Düse 7 mit Reinigungsflüssigkeit jederzeit durch Ansteuerung der Pumpe 17 oder gesteuertes Öffnen des hydraulischen Rückschlagventils 11 stattfinden. Der Luftstrom wird dabei aufgrund vom geringeren Eigendruck einfach überlagert beziehungsweise übersteuert. Das Rückschlagventil 12 wird hierbei geschlossen das Eindringen von Reinigungsflüssigkeit in den Pneumatikkanal 10 dadurch verhindert.

### Bezugszeichenliste

- 1: Reinigungsvorrichtung
- 2: Transparentes Element
- 3: Optische oder optoelektronische Vorrichtung
- 4: Gehäuse
- 5: Fluidzulauf
- 6: Reinigungsmittelstrahl
- 7: Düse
- 8: Hydraulikkanal
- 9: Optische Achse
- 10: Pneumatikkanal
- 11: Hydraulisches Rückschlagventil
- 12: Pneumatisches Rückschlagventil
- 13: Außenrand
- 14: Dosierventil
- 15: Anschlussstück
- 16: Elektrische Schnittstelle
- 17: Pumpe
- 18: Drucklufterzeuger
- 19: Durchflussrichtung
- 20: Ansteuerleitung

## Patentansprüche

1. Reinigungsvorrichtung (1) zum Reinigen eines transparenten Elements (2) einer optischen oder optoelektronischen Vorrichtung (3) mit einem fluiden Reinigungsmittel, umfassend ein Gehäuse (4), in dem die Vorrichtung (3) angeordnet ist, mit wenigstens einem in dem Gehäuse (4) angeordneten Fluidzulauf (5) und wenigstens einer aus dem Fluidzulauf (5) gespeisten Düse (7), wobei die Düse (7) dazu eingerichtet ist, einen Reinigungsmittelstrahl (6) auf das transparente Element (2) zu lenken und wobei die Strahlrichtung des Reinigungsmittelstrahls (6) im Wesentlichen quer zu einer optischen Achse (9) des transparenten Elements (2) vorgesehen ist , wobei der Fluidzulauf (5) zum Durchströmen mit einer Reinigungsflüssigkeit aus einem Hydraulikkanal (8) und mit Druckluft aus einem Pneumatikkanal (10) eingerichtet ist, wobei der Hydraulikkanal (8) ein hydraulisches Rückschlagventil (11) und der Pneumatikkanal (10) ein pneumatisches Rückschlagventil (12) aufweisen, und die Rückschlagventile (11,12) die Kanäle(8,10) in Richtung Düse (7) öffnen und in die entgegengesetzte Richtung sperren, **dadurch gekennzeichnet, dass** das pneumatische Rückschlagventil (12) und/oder das hydraulische Rückschlagventil (11) elektrisch gesteuert ausgebildet ist.

2. Reinigungsvorrichtung (1) nach Anspruch 1 **dadurch gekennzeichnet, dass** das transparente Element (2) nach Außen gewölbt ausgebildet ist und der Reinigungsmittelstrahl (6) zur Ausnutzung eines Coandä-Effekts im Wesentlichen auf einen radialen Außenrand (13) des transparenten Elements (2) ausgerichtet ist.

3. Reinigungsvorrichtung (1) nach Anspruch 2 **dadurch gekennzeichnet, dass** ein Betriebsdruck der Reinigungsflüssigkeit in dem Hydraulikkanal (8) größer als ein Betriebsdruck von Druckluft in dem Pneumatikkanal (10) vorgesehen ist.

4. Reinigungsvorrichtung (1) nach Anspruch 3 **dadurch gekennzeichnet, dass** der Betriebsdruck von Druckluft in dem Pneumatikkanal (10) in einem Bereich zwischen 0,8 bar und 1,2 bar, insbesondere bei etwa 1 bar vorgesehen ist.

5. Reinigungsvorrichtung (1) nach Anspruch 1 **dadurch gekennzeichnet, dass** in dem Pneumatikkanal (10) ein Dosierventil (14) zum gesteuerten Variieren einer in den Fluidzulauf (5) eintretenden Druckluftmenge vorgesehen ist.

6. Reinigungsvorrichtung (1) nach Anspruch 1 **dadurch gekennzeichnet, dass** die Druckluft kontinuierlich strömend in den Fluidzulauf (5) eingespeist wird.

7. Reinigungsvorrichtung (1) nach Anspruch 1 **dadurch gekennzeichnet, dass** die Druckluft gepulst stoßartig in den Fluidzulauf (5) eingespeist wird.

8. Reinigungsvorrichtung (1) nach Anspruch 1 **dadurch gekennzeichnet, dass** der Reinigungsmittelstrahl (6) als ein Flachstrahl ausgebildet ist, welches sich im Wesentlichen in einer zu der optischen Achse (9) orthogonalen Ebene ausbreitet.

9. Optisches Erfassungssystem zur Anordnung in einem Fahrzeug, umfassend wenigstens eine Reinigungsvorrichtung (1) nach einem der vorangegangenen Ansprüche.

## Claims

1. Cleaning device (1) for cleaning a transparent element (2) of an optical or optoelectronic device (3) with a fluid cleaning agent, comprising a housing (4) in which the device (3) is arranged, with at least one fluid inlet (5) arranged in the housing (4) and at least one nozzle (7) fed from the fluid inlet (5), wherein the nozzle (7) is configured so as to direct a cleaning agent jet (6) onto the transparent element (2), and wherein the jet direction of the cleaning agent jet (6) is provided substantially transversely with respect to an optical axis (9) of the transparent element (2), wherein the fluid inlet (5) is configured for being flowed through by a cleaning liquid from a hydraulic channel (8) and by compressed air from a pneumatic channel (10), wherein the hydraulic channel (8) has a hydraulic check valve (11) and the pneumatic channel (10) has a pneumatic check valve (12), and the check valves (11, 12) open the channels (8, 10) in the direction of the nozzle (7) and block in the opposite direction, **characterized in that** the pneumatic check valve (12) and/or the hydraulic check valve (11) is designed to be electrically controlled.

2. Cleaning device (1) according to Claim 1, **characterized in that** the transparent element (2) is of outwardly domed form and the cleaning agent jet (6) is, in order to utilize a Coand 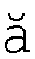 effect, directed substantially onto a radial outer edge (13) of the transparent element (2).

3. Cleaning device (1) according to Claim 2, **characterized in that** an operating pressure of the cleaning liquid in the hydraulic channel (8) is provided so as to be greater than an operating pressure of compressed air in the pneumatic channel (10).

4. Cleaning device (1) according to Claim 3, **characterized in that** the operating pressure of compressed air in the pneumatic channel (10) is provided in a range between 0.8 bar and 1.2 bar, in particular so as to be approximately 1 bar.

5. Cleaning device (1) according to Claim 1, **characterized in that,** in the pneumatic channel (10), there is provided a dosing valve (14) for the controlled variation of a compressed-air quantity entering the fluid inlet (5).

6. Cleaning device (1) according to Claim 1, **characterized in that** the compressed air is fed in a continuously flowing manner into the fluid inlet (5).

7. Cleaning device (1) according to Claim 1, **characterized in that** the compressed air is fed in the manner of pulsed bursts into the fluid inlet (5).

8. Cleaning device (1) according to Claim 1, **characterized in that** the cleaning agent jet (6) is formed as a flat jet, which propagates substantially in a plane orthogonal with respect to the optical axis (9).

9. Optical detection system for arrangement in a vehicle, comprising at least one cleaning device (1) according to any one of the preceding claims.

## Revendications

1. Dispositif de nettoyage (1) destiné à nettoyer un élément transparent (2) d'un dispositif optique ou optoélectronique (3) avec un agent nettoyant fluide, ledit dispositif de nettoyage comprenant un boîtier (4), dans lequel est disposé le dispositif (3), et au moins une entrée de fluide (5) ménagée dans le boîtier (4) et au moins une buse (7) alimentée par l'entrée de fluide (5), la buse (7) étant conçue pour diriger un jet d'agent nettoyant (6) sur l'élément transparent (2) et la direction du jet d'agent nettoyant (6) étant prévue sensiblement transversalement à un axe optique (9) de l'élément transparent (2), l'entrée de fluide (5) étant conçue pour permettre l'écoulement d'un liquide de nettoyage provenant un conduit hydraulique (8) et d'air comprimé provenant d'un conduit pneumatique (10), le conduit hydraulique (8) comportant un clapet anti-retour hydraulique (11) et le conduit pneumatique (10) comportant un clapet anti-retour pneumatique (12), et les clapets anti-retour (11, 12) ouvrant les conduits (8, 10) en direction de la buse (7) et les bloquant dans la direction opposée, **caractérisé en ce que** le clapet anti-retour pneumatique (12) et/ou le clapet anti-retour hydraulique (11) sont conçus pour être commandé électriquement.

2. Dispositif de nettoyage (1) selon la revendication 1, **caractérisé en ce que** l'élément transparent (2) est conçu pour être incurvé vers l'extérieur et le jet d'agent de nettoyage (6) est orienté sensiblement sur un bord extérieur radial (13) de l'élément transparent (2) pour utiliser un effet Coanda.

3. Dispositif de nettoyage (1) selon la revendication 2, **caractérisé en ce qu'**une pression de fonctionnement du fluide de nettoyage dans le conduit hydraulique (8) est supérieure à une pression de fonctionnement d'air comprimé dans le conduit pneumatique (10).

4. Dispositif de nettoyage (1) selon la revendication 3, **caractérisé en ce que** la pression de fonctionnement de l'air comprimé dans le conduit pneumatique (10) est prévue dans une plage comprise entre 0,8 bar et 1,2 bar, notamment à environ 1 bar.

5. Dispositif de nettoyage (1) selon la revendication 1, **caractérisé en ce qu'**une soupape de dosage (14) est prévue dans le conduit pneumatique (10) pour faire varier de manière commandée une quantité d'air comprimé entrant par l'entrée de fluide (5).

6. Dispositif de nettoyage (1) selon la revendication 1, **caractérisé en ce que** l'air comprimé est injecté dans l'entrée de fluide (5) de manière à s'écouler en continu.

7. Dispositif de nettoyage (1) selon la revendication 1, **caractérisé en ce que** l'air comprimé est injecté dans l'entrée de fluide (5) de manière intermittente et pulsée.

8. Dispositif de nettoyage (1) selon la revendication 1, **caractérisé en ce que** le jet d'agent de nettoyage (6) est conçu sous la forme d'un jet plat qui s'étend sensiblement dans un plan orthogonal à l'axe optique (9) .

9. Système de détection optique destiné à être disposé dans un véhicule, ledit système comprenant au moins un dispositif de nettoyage (1) selon l'une des revendications précédentes.
